## Europäisches Patentamt
## European Patent Office
## Office européen des brevets

(11) Veröffentlichungsnummer: **0 237 816**
**A1**

(12) # EUROPÄISCHE PATENTANMELDUNG

(21) Anmeldenummer: 87102274.5

(22) Anmeldetag: 18.02.87

(51) Int. Cl.³: **F 02 M 33/00**
**F 23 L 7/00**

(30) Priorität: 26.02.86 DE 3606092

(43) Veröffentlichungstag der Anmeldung:
23.09.87 Patentblatt 87/39

(84) Benannte Vertragsstaaten:
DE FR GB IT

(71) Anmelder: Plaksin, Eugen
Wiesenstrasse 18
D-6750 Kaiserslautern(DE)

(72) Erfinder: Plaksin, Eugen
Wiesenstrasse 18
D-6750 Kaiserslautern(DE)

(74) Vertreter: Fritsch, Klaus, Dipl.-Ing.
Richard Wagner Strasse 1a
D-6701 Hochdorf-Assenheim 2(DE)

(54) **Vorrichtung zur Aufbereitung von Verbrennungsluft.**

(57) Die Erfindung betrifft eine Vorrichtung zur Aufbereitung von Verbrennungsluft, die einem Brennraum, insbesondere eines Kraftfahrzeugmotors, eines Gas- oder Ölbrenners, eines Kraftwerkes oder dergleichen, zuführbar ist. Es liegt die Aufgabe zugrunde, eine Vorrichtung vorzuschlagen, um den Stickstoffanteil zu reduzieren und eine verbesserte Verbrennung zu erreichen. Es wird vorgeschlagen, daß eine Beschleunigerschnecke (2) mit einem spiralartigen Strömungskanal (4) und einer radial außenliegenden Eingangsöffnung (6) zur Zufuhr der Verbrennungsluft vorgesehen ist. Der Strömungskanal (4) enthält wenigstens ein Trennelement (12), insbesondere einen Trennkeil (14) und/oder eine Trennwand (15) derart, daß infolge der Zentrifugalkraft die schwereren Sauerstoff- und/oder Ozonmoleküle einer ersten mit dem Brennraum in Verbindung stehenden Austrittsöffnung (18) und die leichteren Stickstoffmoleküle einer zweiter Austrittsöffnung (22) zugeführt werden.

EP 0 237 816 A1

./...

Fig. 1

SCHNITT B - B

Patentanwalt Dipl.-Phys. HANS KLOSE
Zugelassener Vertreter vor dem Europäischen Patentamt

6700 Ludwigshafen
Kurfürstenstraße 32

0237816

-1-

Anmelder:     Eugen Plaksin, Wiesenstr. 18
              6750 Kaiserslautern


Vorrichtung zur Aufbereitung von Verbrennungsluft


Die Erfindung betrifft eine Vorrichtung zur Aufbereitung von Verbrennungsluft, die einem Brennraum, insbesondere eines Kraftfahrzeugmotos, eines Gas- oder Ölbrenners eines Kraftwerkes oder dergleichen, zuführbar ist.

Bekanntlich wird bei einer Vielzahl von Verbrennungsprozessen der notwendige Sauerstoff durch Zufuhr der Umgebungsluft in den Brennraum realisiert. So wird beispielsweise bei einem Otto- oder Dieselmotor eines Kraftfahrzeuges die Luft durch Selbstansaugung zugeführt, wobei Staubpartikel oder dergleichen durch ein geeignetes Filter abgetrennt werden. In Kraftwerken und bei großen Brennkammern werden oftmals zusätzlich Gebläse eingesetzt, um die notwendige Luftmenge dem Brennraum zuführen zu können. Hierbei werden die in der Luft enthaltenen ca. 80% Stickstoff, die nicht der Verbrennung dienen, mit angesaugt und gelangen ebenso wie der Sauerstoff in den Brennraum. Der Stickstoff muß dann ebenso wie die Verbrennungsgase aus dem Brennraum gefördert werden, wobei teilweise giftige Stickoxide entstehen. Der Stickstoff mindert, insbesondere durch Aufnahme von Verbrennungswärme, den Wirkungsgrad des Verbrennungsprozesses, wobei infolge einer unvollständigen Verbrennung giftige Stickoxide, Kohlenwasserstoffe und Kohlenmonoxid entstehen.

Der Erfindung liegt die Aufgabe zugrunde, eine Vorrichtung vorzuschlagen, mittels welcher der in den Brennraum gelangende Stickstoffanteil der Verbrennungsluft reduziert und eine verbesserte Verbrennung gewährleistet wird. Mittels der Vorrichtung soll der Wirkungsgrad des Verbrennungsprozesses erhöht und ferner sollen giftige Anteile in den Abgasen verringert werden. Die Vorrichtung soll darüberhinaus ohne grundsätzliche Änderungen üblicher Motor- oder Brennraumkonzepte problemlos auch bei den heute üblichen Motoren oder Brennräumen zum Einsatz gelangen können.

Zur Lösung dieser Aufgabe wird vorgeschlagen, daß eine Beschleunigerschnecke mit einem spiralförmigen Strömungskanal und ferner ein Trennelement, insbesondere Trennkeil und/oder Trennwand, derart vorgesehen sind, daß infolge der Zentrifugalkraft die schwereren Sauerstoff- und / oder Ozonmoleküle einer ersten mit dem Brennraum in Verbindung stehenden Öffnung zuführbar sind, während die leichteren Stickstoffmoleküle einer Austrittsöffnung zuführbar sind.

Die erfindungsgemäße Vorrichtung zeichnet sich durch einen einfachen Aufbau aus und ermöglicht eine wesentlich verbesserte Verbrennung, da der dem Brennraum über die erste Öffnung zugeführte Anteil wesentlich weniger Stickstoff als die Umgebungsluft enthält. In den Brennraum kann folglich pro Volumeneinheit wesentlich mehr Sauerstoff gelangen. Es wird nicht nur eine verbesserte Verbrennung bei optimaler Nutzung des eingesetzten Brennstoffes sondern auch eine Reduzierung der Umweltbelastung erzielt. Im spiralartigen Strömungskanal der Beschleunigerschnecke ergibt sich infolge der massenabhängigen Zentrifugalkraft an der Außenseite eine Anreicherung der im Vergleich zu Stickstoff schwereren Sauerstoff- und Ozonmoleküle. In der Beschleunigerschnecke wird erfindungsgemäß aufgrund des kleiner werdenden Durchmessers die Geschwindigkeit der einströmenden Verbrennungsluft erhöht und die auf die einzelnen Moleküle wirksame Zentrifugalkraft erhöht. Mittels des Trennelements erfolgt die Fraktionierung derart, daß die Sauerstoff- und Ozonmoleküle überwiegend zur ersten Öffnung

Patentanwalt Dipl.-Phys. HANS KLOSE
Zugelassener Vertreter vor dem Europäischen Patentamt

6700 Ludwigshafen
Kurfürstenstraße 22

0237816

- 3 -

gelangen, während die relativ leichten Stickstoffmoleküle zur zweiten Öffnung und von dort zu dem Außenraum wieder gelangen. Die Fraktionierung erfolgt grundsätzlich ohne zusätzliche Energiezufuhr, wobei erfindungsgemäß der Druckunterschied zwischen der Eingangsöffnung der Beschleunigerschnecke und dem Brennraum ausgenutzt wird. So kann beispielsweise bei einem Verbrennungsmotor durch dessen Unterdruck die Verbrennungsluft an der Austrittsöffnung angesaugt werden oder beispielsweise bei einem Ölbrenner mittels eines Gebläses durch die Eingangsöffnung eingeblasen werden. Im Hinblick auf die Vermeidung oder Reduzierung von Turbulenzen ist das Ansaugen zu bevorzugen. Ferner kann im Rahmen dieser Erfindung durch nachfolgend näher zu erläuternde Leitelemente im Strömungskanal die Tendenz zu Turbulenzen reduziert bzw. eine möglichst laminare Strömung im Strömungskanal erhalten werden. Mit einem Labormuster, dessen Strömungskanal nicht der exakten Spiralform entsprach und relativ rauhe Wände aufwies, betrug der Sauerstoffgehalt an der Eingangsöffnung 20,6 % und an de Austrittsöffnung 20,8 %, was einer Anreicherung von immerhin schon 0,2% entsprach. Trotz der durch die unvollkommene Geometrie bedingten turbulenten Strömung, wobei ferner die Verbrennungsluft mit einem Gebläse in die Eingangsöffnung gedrückt wurde, ergab sich eine eindeutige Tendenz der Sauerstoffanreicherung.

Das Trennelement, welches bevorzugt als ein Trennkeil und/oder eine Trennwand ausgebildet ist, ist erfindungsgemäß derart im Strömungskanal angeordnet, daß entsprechend der leichteren Volumenanteile, insbesondere des Stickstoffes, in bezug zu den schwereren Volumenanteile, insbesondere Sauerstoff und Ozon, nachfolgend eine Unterteilung des Strömungskanales vorhanden ist. Im Rahmen dieser Erfindung können auch mehrere Beschleunigerschnecken und ggfs. auch mehrere Trennelemente miteinander integriert sein, um eine möglichst weitgehende Fraktion des Stickstoffes zu erhalten. Die Größe der Beschleunigerschnecke oder auch Beschleunigerschnecken sowie des Trennelements oder der Trennelemente sind von dem jeweiligen Volumenstrom abhängig. Erfindungsgemäß wird die Selbstansaugung aufgrund des Unterdruckes im Brennraum eines Kfz.-Motors oder dergleichen genutzt, und aufgrund der Massenabhängigkeit der Zentrifugalkraft wird im Bereich der Außenseite des Strömungskanales eine Anreicherung der schwereren Ozon- oder Sauerstoffmoleküle erfolgen. Die Dichte von Stickstoff beträgt
1,25, während Sauerstoff eine Dichte von 1,43 und Ozon eine
Dichte von 2,14 aufweisen.

In einer wesentlichen Ausgestaltung ist im Strömungskanal
wenigstens ein Leitelement in der Weise angeordnet, daß die
Strömung laminar gehalten und/oder ausgebildet werden kann. Im
Strömungskanal ist an der Innenwand, welche der zentralen
Achse näher als eine Außenwand liegt, wenigstens ein Leitelement angeordnet, das sich in Richtung zur Außenwand erstreckt.
Das Leitelement ist somit ebenfalls spiralförmig ausgebildet
und erstreckt sich quer zur zentralen Achse von der Innenwand
zur Außenwand hin, wobei zur Außenwand zweckmäßig ein Abstand
eingehalten wird. Das oder die Leitelemente sind als möglichst
schmale Scheiben ausgebildet und ragen bis zu etwa 80 % der
Breite des Strömungskanales von der Innenwand her in diesen
hinein. Die schwereren Sauerstoff-und/oder Ozonmoleküle gelangen so zur Außenwand, wobei infolge der zumindest annähernd
laminaren Strömung eine gute Anreicherung im Bereich der
Außenwand gewährleistet wird. Die Leitelemente enden zweckmäßig kurz vor dem Trennelement. Im Rahmen der Erfindung ist
das Leitelement in der Weise bis zum Trennelement bzw. Trennkeil herangeführt, daß auch in dessen Nähe die laminare Strömung bestehen bleibt und nicht durch Turbulenzen am Ende des
Strömungskanales der Anreicherungseffekt gemindert werden
kann.

In einer besonderen Weiterbildung ist eine Strahlenquelle für
insbesondere UV-Strahlen vorgesehen, um die Verbrennungsluft
mit Ozon anzureichern. Im Rahmen der Erfindung wird zusätzlich
durch eine UV-Bestrahlung die massenabhängige Zentrifugalkraft
erhöht. Bevorzugt werden UV-C-Strahlen mit Wellenlängen
zwischen 250 bis 280 nm eingesetzt. Mit einer solchen kurzwelligen Strahlung wird eine besonders effektive Ozonierung
erreicht. Im Rahmen dieser Erfindung können auch andere
Strahlen, und zwar insbesondere UV-A-Strahlen, deren Wellenlänge zwischen 315 bis 400 nm liegt und/oder UV-B-Strahlen mit Wellenlängen zwischen 280 bis 315 nm zum Einsatz gelangen, die jedoch die Effektivität der UV-C-Strahlen nicht erreicht. Die UV-Strahlenquellen stehen in den unterschiedlichsten Ausgestaltungen kostengünstig zur Verfügung. Gleichwohl soll durch deren Erwähnung keine Einschränkung nur auf derartige Strahlenquellen erfolgen. Aufgrund der UV-Bestrahlung oder einer vergleichbaren Strahlung kann eine Anreicherung von 60% und darüber an Ozon bewirkt werden und folglich die Anreicherung mit entsprechend schweren Ozonmolekülen an der Außenwand der Beschleunigerschnecke nicht unwesentlich verbessert werden. Da Ozon sehr schnell wieder in Sauerstoff zerfällt, steht im Verbrennungsraum wieder der Sauerstoff zur Verfügung. Bei kleineren Brennräumen, insbesondere bei Otto-oder Dieselmotoren sowie bei Gas- oder Ölbrennern, kann erfindungsgemäß die UV-Strahlenquelle mit der Beschleunigerschnecke und der Trennkeil oder dergleichen komplett als eine Einheit gefertigt werden. Die Beschleunigerschnecke und das Trennelement bestehen zweckmäßig aus einem UV-Strahlen durchlässigen Werkstoff, insbesondere Quarzglas. Bei großen Brennräumen, wie z. B. bei Kraftwerken, die einen großen Volumenstrom erfordern, kann ohne weiteres auch eine Teilefertigung vorgesehen werden, wobei zweckmäßigerweise durch geeignete Fenster oder ähnliches die UV-Strahlung in den Strömungskanal eingeleitet wird. Zur Erzeugung der UV-Strahlen können insbesondere Ozonstrahlerlampen oder vergleichbare Lampen zum Einsatz gelangen. Solche Lampen stehen für kleine Leistungen bei beispielsweise 12 Volt Gleichspannung bis hin zu Leistungen von 10 bis 20 KW im Handel zur Verfügung.

Um eine Fremdeinströmung durch die zweite Öffnung zu unterbinden, wird die zweite Öffnung in Richtung nach außen mit einem sich vergrößernden Durchmesser versehen. Hierdurch wird die Strömungsgeschwindigkeit des austretenden Stickstoffes reduziert und ein Staudruck erzeugt, durch welchen eine fehlerhafte Ansaugung vermieden wird. Im Rahmen der Erfindung können ferner auch zusätzliche Gebläse an einer der beiden Austrittsöffnungen, vorgesehen werden, um die Strömung durch die Beschleunigerschnecke zu gewährleisten. Durch ein der zweiten Öffnung zugeordnetes Gebläse kann eine unzulässige Fremdein-

- 6 -

strömung verhindert werden. Derartige Gebläse können erfindungsgemäß auch von den Abgasen des Motors, ähnlich der Abgasturbine eines Abgasturboladers, angetrieben werden.

Die Erfindung wird nachfolgend an Hand der Zeichnungen näher
erläutert. Es zeigen:

Fig. 1    schematisch einen Schnitt durch die Beschleunigerschnecke mit Trennkeil,

Fig. 2    einen Schnitt entlang Schnitt A gemäß Fig. 1.

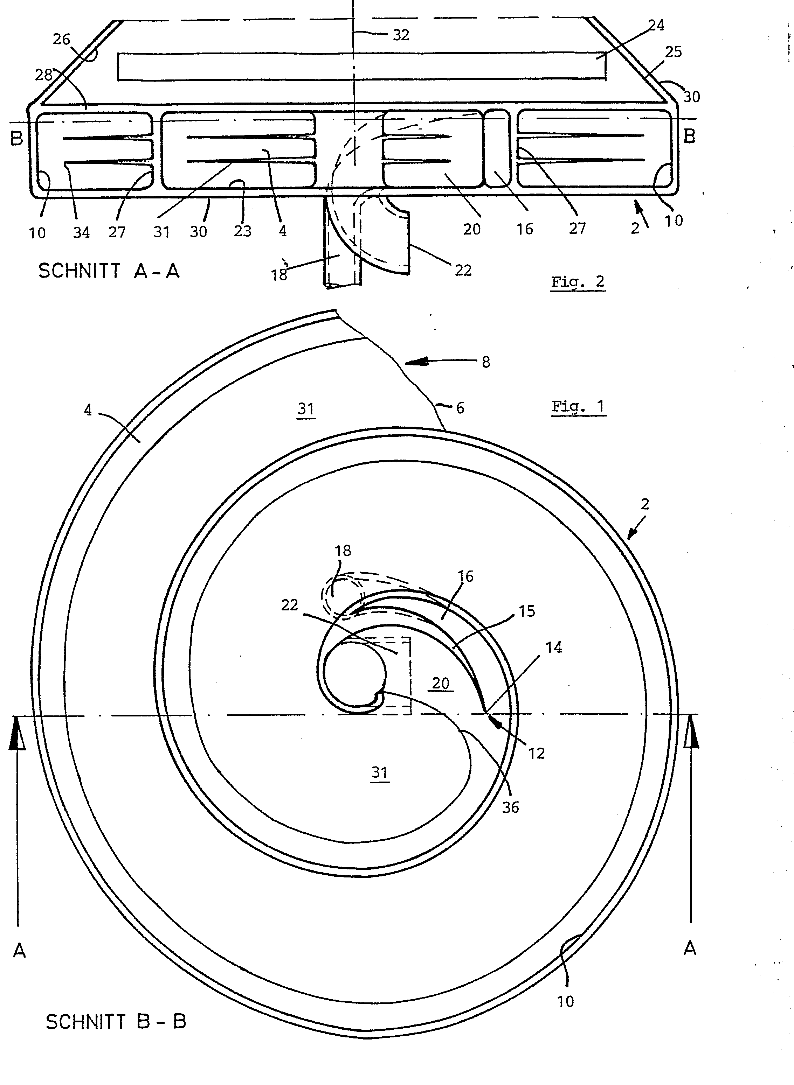

Fig. 1 zeigt schematisch die Beschleunigerschnecke 2 mit einem
spiralförmigen Strömungskanal 4. Durch eine Eingangsöffnung 6
gelangt, wie durch den Pfeil 8 angedeutet, Umgebungsluft in
den Strömungskanal 4. Gelangt die Vorrichtung bei einem Verbrennungsmotor, insbesondere eines Kraftfahrzeuges, zum Einsatz, so wird die Umgebungsluft aufgrund der Druckdifferenz
zwischen Umgebung und Ansaugkanal des Motors angesaugt. Da im
Strömungskanal 4 auf die einströmende Luft die von der Masse
abhängige Zentrifugalkraft einwirkt, ergibt sich im Bereich
der Außenwand 10 des Strömungskanales 4 eine Anreicherung der
im Vergleich zu Stickstoff schwereren Sauerstoff- bzw. Ozonmoleküle. Im Inneren der Beschleunigerschnecke 2 ist erfindungsgemäß ein Trennelement 12 mit einem Trennkeil 14 vorgesehen.
Hinter dem Trennelement 12 ist ein radial innen von einer
Trennwand 15 begrenzter, äußerer Teilkanal 16 zu erkennen, der
zu einer ersten Austrittsöffnung 18 führt. Diese Austrittsöffnung 18 ist mit dem Brennraum des Motors verbunden und enthält
im Vergleich zur Umgebungsluft einen wesentlich höheren Anteil
von Sauerstoff bzw. Ozon. Im inneren Teilkanal 20 wird hingegen überwiegend Stickstoff gesammelt, der durch eine zweite
Austrittsöffnung 22 nach außen geleitet wird. Die leichteren
Stickstoffmoleküle werden hinter dem Trennelement 12 nach
innen abgelenkt und gelangen in die sich vergrößernde Austrittsöffnung 22, wobei sich die Strömungsgeschwindigkeit
verlangsamt und ein Staudruck entsteht. Hierdurch wird eine unzulässige Fremdströmung durch die Austrittsöffnung 22 in das
Innere der Beschleunigerschnecke unterbunden.

Fig. 2 zeigt schematisch einen Schnitt durch die Beschleunigerschnecke 2, wobei nunmehr auch die nach unten gerichteten
beiden Austrittsöffnungen 18, 22 gut zu erkennen sind. Oberhalb des Strömungskanales 4 befindet sich eine hier nur schematisch angedeutete UV-C-Strahlenquelle 24, und zwar innerhalb
eines konischen Reflektors 25. Bei dieser Ausführungsform
besteht die gesamte Beschleunigerschnecke einschließlich
Trennkeil und Reflektor aus einer kompletten Baueinheit, die
erfindungsgemäß aus Quarzglas gefertigt ist. Die Innenflächen
26 des Reflektors 25 sowie der Boden 23 und die Außenwand 10
der Beschleunigerschnecke sind in geeigneter Weise verspiegelt, damit die UV-Strahlen durch die Decke 28 zu dem
Strömungskanal gelangen und dort die Ozonanreicherung bewirken. Aufgrund der Reflektion der UV-C-Strahlen an den Innenflächen 26 und am Boden 23 und der Wand 10, wird die Ozonisierung erhöht. Es versteht sich, daß ggfs. auch ausschließlich
die Decke 28 aus einem UV-Strahlen durchlässigen Werkstoff und
die übrigen Teile aus geeigneten Werkstoffen bestehen können.
Besteht die gesamte Baueinheit aus Quarzglas, so werden mit
Ausnahme der Decke 28 die übrigen Teile erfindungsgemäß mit
einer geeigneten Beschichtung 30, und zwar insbesondere mit
Silikaten, Wolframaten und Phosphaten, versehen, um das Abstrahlen von UV-Strahlen zu unterbinden. Die Beschichtung 30
ist zweckmäßigerweise an der Außenseite der Beschleunigerschnecke und des Reflektors vorgesehen. Die Beschleunigerschnecke 2 erstreckt sich im wesentlichen in einer Radialebene
und erfindungsgemäß sind die Austrittsöffnungen 18, 22 zumindest teilweise in axialer Richtung angeordnet, um die voneinander getrennten Anteile in axialer Richtung aus dem Inneren
der Beschleunigerschnecke 2 herauszuleiten.

Im Strömungskanal 4 befinden sich zwei von der Innenwand 27
radial nach außen in Richtung auf die Außenwand 10 erstreckende Leitelemente 31. Die Leitelemente 31 sind als in Richtung
der zentralen Achse 32 schmale spiralförmige Scheiben ausgebildet und erstrecken sich quer zu der genannten Achse 32 von

Patentanwalt Dipl.-Phys. HANS KLOSE
Zugelassener Vertreter vor dem Europäischen Patentamt

6700 Ludwigshafen
Kurfürstenstraße 22

0237816

- 8 -

der Innenwand 27 radial nach außen. Der radiale Abstand der außenliegenden Kante 34 des Leitelementes 31 zur Außenwand 10 beträgt im Rahmen dieser Erfindung im wesentlichen 20 % des Abstandes zwischen der Innenwand 27 zur Außenwand 10. Die schwereren Sauerstoff- und Ozonteilchen können somit in den Bereich der Außenwand 10 gelangen und die leichteren Stickstoffteilchen nach Innen verdrängen, wobei mittels den Leitelementen 31 eine zumindest näherungsweise laminare Strömung erzwungen wird.

In Verbindung mit Figur 1 ist ferner ersichtlich, daß das Ende 36 des Leitelementes 31 kurz vor dem Trennelement 12 sich befindet. Das Leitelement 31 läuft im Bereich des Trennelementes 12 in einer Biegung aus und ermöglicht den Eintritt der leichten Stickstoffmoleküle in den inneren Teilkanal 20 und aus diesem den Austritt zur zweiten Austrittsöffnung 22.

Die Beschleunigerschnecke 2 kann gemäß Figur 2 etwa im Bereich der Schnittebene B den in zwei Teile unterteilt sein, damit im Rahmen dieser Erfindung die spiralförmigen Leitelemente 31 in den Strömungskanal 4 mit geringem Fertigungsaufwand angeordnet werden können.

Bezugszeichenliste

| 2  | Beschleunigerschnecke |
| 4  | Strömungskanal |
| 6  | Eingangsöffnung |
| 8  | Pfeil |
| 10 | Außenwand |
| 12 | Trennelement |
| 14 | Trennkeil |
| 15 | Trennwand |
| 16 | äußerer Teilkanal |
| 18 | Austrittsöffnung |
| 20 | innerer Teilkanal |
| 22 | zweite Austrittsöffnung |
| 23 | Boden |
| 24 | UV-Strahlenquelle |
| 25 | Reflektor |
| 26 | Innenfläche |
| 27 | Innenwand |
| 28 | Decke |
| 30 | Beschichtung |
| 31 | Leitelement |
| 32 | Achse |
| 34 | Kante |
| 36 | Ende |

Ansprüche

1. Vorrichtung zur Aufbereitung von Verbrennungsluft, die einem Brennraum, insbesondere eines Kraftfahrzeugmotors, Gas- oder Ölbrenners oder eines Kraftwerkes oder dergleichen, zuführbar ist,

dadurch gekennzeichnet, daß eine Beschleunigerschnecke (2) mit einem spiralartigen Strömungskanal (4) vorgesehen ist, die eine radial außenliegende Eingangsöffnung (6) für die Verbrennungsluft aufweist,

daß im Strömungskanal (4) wenigstens ein Trennelement (12), insbesondere Trennkeil (14) und/oder Trennwand (15) derart vorgesehen ist, daß infolge der Zentrifugalkraft die schweren Sauerstoff- und / oder Ozonmoleküle einer ersten mit dem Brennraum in Verbindung stehenden Austrittsöffnung (18) und die leichteren Stickstoffmoleküle einer zweiten Austrittsöffnung (22) zugeführt werden.

2. Vorrichtung nach Anspruch 1, dadurch gekennzeichnet, daß im Strömungskanal (4) zum Aufrechterhalten und/oder Erzeugen einer laminaren Strömung wenigstens ein Leitelement (31) angeordnet ist, das sich im wesentlichen quer zur zentralen Achse (32) erstreckt.

3. Vorrichtung nach Anspruch 2, dadurch gekennzeichnet, daß das oder die Leitelemente (31) an der Innenwand (27) angeordnet sind und sich im wesentlichen in radialer Richtung nach außen zur Außenwand (10) des Strömungskanals (4) erstrecken und/oder daß die radial außen liegende Spitze oder Kante (34) des spiralförmigen Leitelements (31) zur Außenwand (10) einen Abstand aufweist, der bevorzugt zumindest näherungsweise 20 % der radialen Breite des Strömungskanales (4) beträgt.

Patentanwalt Dipl.-Phys. HANS KLOSE
Zugelassener Vertreter vor dem Europäischen Patentamt

6700 Ludwigshafen
Kurfürstenstraße 72
0237816

- 11 -

4. Vorrichtung nach einem der Ansprüche 1 bis 3, dadurch gekennzeichnet, daß das oder die Leitelemente (31) mit ihren inneren Enden (36) in einem kleinen Abstand vor dem Trennelement (12) und/oder der Trennwand (15) enden.

5. Vorrichtung nach einem der Ansprüche 1 bis 4, dadurch gekennzeichnet, daß das im Inneren der Beschleunigerschnecke (2) angeordnete Trennelement (12) einen Trennkeil (14) und/oder eine Trennwand (15) aufweist, die den Strömungskanal in einen äußeren Teilkanal (16) und einen inneren Teilkanal (20) unterteilen, wobei der innere Teilkanal (20) zweckmäßig den größeren Querschnitt aufweist und zwar insbesondere entsprechend dem Stickstoffanteil.

6. Vorrichtung, insbesondere nach einem der Ansprüche 1 bis 5, dadurch gekennzeichnet, daß eine UV-Strahlungsquelle (24) vorgesehen ist, um die Verbrennungsluft mit Ozon anzureichern und/oder die Beschleunigerschnecke (2) eine Decke (28) aufweist, die zumindest in Teilbereichen für UV-Strahlen durchlässig ist.

7. Vorrichtung nach einem der Ansprüche 1 bis 6, dadurch gekennzeichnet, daß die UV-Strahlenquelle (24) innerhalb eines Reflektors (25) angeordnet ist.

8. Vorrichtung nach einem der Ansprüche 1 bis 7, dadurch gekennzeichnet, daß die erste Austrittsöffnung (18) im wesentlichen im Zentrum der Beschleunigerschnecke (2) und die zweite Austrittsöffnung (22) in einem radialen Abstand vom Zentrum angeordnet sind.

9. Vorrichtung nach einem der Ansprüche 1 bis 8, dadurch gekennzeichnet, daß der Strömungskanal (4) in der Radialebene betrachtet einen im wesentlichen rechteckförmigen Querschnitt aufweist.

10. Vorrichtung nach einem der Ansprüche 1 bis 9, dadurch gekennzeichnet, daß die äußere Austrittsöffnung (18) und/oder die zweite Austrittsöffnung (22) zumindest teilweise in axialer Richtung verlaufen, um die Anteile aus dem Inneren der im wesentlichen in einer Radialebene liegenden Beschleunigerschnecke (2) in axialer Richtung abzuleiten.

SCHNITT A - A

Fig. 2

SCHNITT B - B

Fig. 1

Europäisches
Patentamt

# EUROPÄISCHER RECHERCHENBERICHT

Nummer der Anmeldung

EP 87 10 2274

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | PATENT ABSTRACTS OF JAPAN, Band 10, Nr. 181 (M-492)[2237], 25. Juni 1986; & JP - A - 61 28750 (GENICHI TOMINAGA) 08.02.1986 | 1 | F 02 M 33/00 F 23 L 7/00 |
| Y | idem | 1 | |
| | --- | | |
| Y | DE-A-1 919 503 (STROBEL) * Seite 2, Zeile 15 - Seite 3, Zeile 15; Figur * | 1 | |
| | --- | | |
| A | DD-A- 45 065 (S. WÜNSCH) * Spalte 3, Zeilen 1-14; Figuren 1, 2 * | 1,5,9, 10 | |
| | --- | | |
| A | DE-A-2 929 139 (HIERONYMI) * Figuren 1, 2 * | 1,5,8, 9 | RECHERCHIERTE SACHGEBIETE (Int. Cl.4) |
| A | US-A-4 195 606 (WALLIS et al.) * Ansprüche 1, 2, 5, 6; Figuren 1-7 * | 6,7 | B 01 D 53/00 B 04 C 1/00 F 02 M 27/00 F 02 M 33/00 F 23 C 7/00 F 23 L 7/00 |
| | --- | | |
| A | DE-A-2 063 634 (AMF) | | |
| | --- | | |
| A | DE-C- 934 763 (H. TOLLERT) | | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 19-05-1987 | LEMBLE Y.A.F.M. |